(19) Europäisches Patentamt
European Patent Office
Office européen des brevets

(11) **EP 1 316 182 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(21) Anmeldenummer: **01974004.2**

(22) Anmeldetag: **30.08.2001**

(51) Int Cl.⁷: **H04L 25/02**

(86) Internationale Anmeldenummer:
**PCT/DE2001/003390**

(87) Internationale Veröffentlichungsnummer:
**WO 2002/021781 (14.03.2002 Gazette 2002/11)**

(54) **VERBESSERTE KANALENTZERRUNG FÜR MOBILFUNKEMPFÄNGER**

IMPROVED CHANNEL EQUALISATION FOR MOBILE RADIO RECEIVERS

EGALISATION DE CANAL AMELIOREE POUR RECEPTEUR DE TELEPHONIE MOBILE

(84) Benannte Vertragsstaaten:
**DE FR GB**

(30) Priorität: **05.09.2000 DE 10043742**

(43) Veröffentlichungstag der Anmeldung:
**04.06.2003 Patentblatt 2003/23**

(73) Patentinhaber: **Infineon Technologies AG**
**81669 München (DE)**

(72) Erfinder:
• **YANG, Bin**
**81735 München (DE)**
• **BOHNHOFF, Peter**
**81667 München (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 954 142** **US-A- 5 185 764**

• **JOYCE R M ET AL: "Prediction of GSM performance using measured propagation data" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28. April 1996 (1996-04-28), Seiten 326-330, XP010162402 ISBN: 0-7803-3157-5**
• **BAIER A ET AL: "Bit synchronization and timing sensitivity in adaptive Viterbi equalizers for narrowband-TDMA digital mobile radio systems" PHILIPS KOMMUNIKATIONS INDUSTRIE AG, XP010077570**

**Beschreibung**

Die Erfindung betrifft eine Empfangseinheit für die Mobilfunkübertragung, welche einen Kanalschätzer sowie einen Kanalentzerrer aufweist, sowie ein Verfahren zur Entzerrung von über einen Mobilfunkkanal übertragenen Datensymbolen.

Bei der Mobilfunkübertragung wird die gesamte Bitfehlerrate im wesentlichen durch drei Fehlerquellen bestimmt. Eine Fehlerquelle ist das Rauschen, das dem eigentlichen Nutzsignal überlagert ist und das die Dekodierung erschwert. Außerdem verursacht der sogenannte Frequenzfehler einen Beitrag zur gesamten Bitfehlerrate. Als Frequenzfehler wird der durch eine Frequenzverstimmung zwischen Sender und Empfänger verursachte Fehler bezeichnet, wobei diese Frequenzverstimmung beispielsweise durch den Dopplereffekt verursacht sein kann.

Als weitere Fehlerquelle ist die Kanalverzerrung zu nennen. Das Sendesignal gelangt auf verschiedenen Pfaden zum Empfänger und wird durch diese verschiedenen Pfade verschieden stark verzögert. Empfängerseitig kommt es dann zu einer Überlagerung von unterschiedlich stark verzögerten Signalanteilen, zur sogenannten Intersymbol-Interferenz (ISI). Zwar versucht man empfangsseitig durch Schätzung des Kanalverhaltens und Entzerrung des empfangenen Signals die Intersymbol-Interferenz zu beseitigen. Diese Entzerrung gelingt aber nur zum Teil, und deshalb trägt die Intersymbol-Interferenz zum gesamten Bitfehler bei.

Im Mobilfunkstandard GSM beträgt der Signal-Rausch-Abstand weniger als 10 dB. Insofern ist das Rauschen hier die dominante Fehlerquelle. Die im GSM-Standard verwendete GMSK-Modulation verwendet einen Signalraum mit den Signalpunkten +1 und -1. Da diese beiden Signalpunkte eine Phasendifferenz von 180° aufweisen, ist GSM relativ robust gegenüber Störungen, wie sie beispielsweise durch Restfehler der beseitigten Intersymbol-Interferenz hervorgerufen werden.

Bei dem Dienst GPRS (General Packet Radio Service) wird mit einem höheren Signal-Rausch-Abstand von mehr als 15 dB gearbeitet. Auf diese Weise werden Datenübertragungsraten bis zu 21,4 kBit/s ermöglicht. Das Rauschen tritt hier als Fehlerquelle in den Hintergrund, und insofern gewinnt die Bekämpfung der durch ISI hervorgerufenen Fehler umso mehr an Bedeutung.

Als Übergangsstandard zwischen GSM/GPRS und UMTS wurde der Standard EDGE (Enhanced Data Rates for GSM Evolution) sowie der zugehörige Paketdienst EGPRS (Enhanced GPRS) definiert. Bei EDGE handelt es sich um ein TDMA-Verfahren (Time Division Multiple Access), aber es wird bereits von der GMSK-Modulation auf die 8-PSK-Modulation übergegangen. Bei der 8-PSK-Modulation wird ein Signalraum mit acht Signalpunkten verwendet, wobei die Phasendifferenz zwischen den einzelnen Signalpunkten 45° beträgt. Bereits kleine Fehler bei der Entzerrung der empfangenen Signale führen hier zu einer fehlerhaften Dekodierung der empfangenen Datensymbole und somit zu einer Steigerung der Bitfehlerrate. Insofern ist der Modulationsstandard 8-PSK wesentlich anfälliger gegenüber den durch ISI verursachten Fehlern, als dies beim Vorgängerstandard GMSK der Fall war.

Es wird daher immer wichtiger, geeignete Maßnahmen zur Bekämpfung des durch ISI verursachten Beitrags zur Bitfehlerrate vorzusehen.

In der Schrift US 5,185,764 ist ein Empfänger beschrieben, welcher mittels eines Kanalschätzers eine bestimmte Anzahl von Kanalparametern mißt und die gemessenen Kanalparameter für die Entzerrung eines Empfangssignals verwendet.

In dem Artikel "Bit Synchronization and Timing Sensitivity in Adaptive Viterbi Equalizers for Narrowband-TDMA Digital Mobile Radio Systems" von A. Baier et al., Philips Kommunikations Industrie AG, Seiten 377 bis 384, ist die Verwendung von fünf oder sechs Kanalparameter für die Entzerrung eines Signals beschrieben.

In dem Artikel "Prediction of GSM Performance Using Measured Propagation Data", von R.M. Joyce et al., Vehicular Technology Conference, 1996, Mobile Technology for the Human Race, IEEE 46th Atlanta, G.A., USA, 28. April bis 1. Mai 1996, New York, NY, USA, IEEE, US, 28. April 1996, Seiten 326 bis 330, ist die Entzerrung eines GSM-Datensignals mit einer Trainingsfolge bestehend aus 26 Bit beschrieben. Für die Entzerrung werden fünf Kanalparameter berechnet.

Der Erfindung liegt die Aufgabe zugrunde, eine Empfangseinheit für die Mobilfunkübertragung sowie ein Verfahren zur Entzerrung von über einen Mobilfunkkanal übertragenen Datensymbolen bereitzustellen, welche bei gleichbleibender Sendeleistung eine Verringerung der Bitfehlerrate ermöglichen. Aufgabe der Erfindung ist es insbesondere, den durch Intersymbol-Interferenz verursachten Beitrag zur Bitfehlerrate zu verringern.

Diese Aufgabe wird erfindungsgemäß durch eine Empfangseinheit für die Mobilfunkübertragung gemäß Anspruch 1 sowie durch ein Verfahren zur Entzerrung von über einen Mobilfunkkanal übertragenen Datensymbolen gemäß Anspruch 7 gelöst.

Die erfindungsgemäße Empfangseinheit für die Mobilfunkübertragung umfaßt einen Kanalschätzer, der Kanalkoeffizienten zur Modellierung des Übertragungskanals durch Korrelation der empfangenen Datensymbole mit einer aus 26 Datensymbolen bestehenden Trainingsfolge ermittelt, sowie einen Kanalentzerrer, der die empfangenen Datensymbole unter Verwendung der vom Kanalschätzer ermittelten Kanalkoeffizienten entzerrt. Durch den Kanalschätzer werden zusätzlich zu den ersten sechs Kanalkoeffizienten ($h_0$, $h_1$, ... $h_5$) zumindest ein weiterer Kanalkoeffizient ermittelt. Die für die Korrelation mit der Trainingsfolge verwendeten empfangenen Datensymbole enthalten bei der Ermittlung des zumindest einen weiteren Kanalkoeffizienten zumindest ein empfangenes Datensymbol der Trainingsfolge weniger als bei der Ermittlung der ersten 6 Kanalkoeffizienten. Die empfangenen Datensymbole werden dann vom Kanalentzerrer unter Verwendung von mehr als sechs Kanalkoeffizienten entzerrt.

Bei den Lösungen des Stands der Technik wurde das Kanalverhalten jeweils mit vier, fünf oder maximal sechs Kanalkoeffizienten $h_0,...h_5$ modelliert. Für die Kanallänge (L+1) wurde also jeweils (L + 1) ≤ 6 gesetzt. Einer genaueren Modellierung des Kanalverhaltens mit Hilfe weiterer Kanalkoeffizienten standen folgende drei Erwägungen entgegen.

I.

Die wichtigsten Beiträge zur Intersymbol-Interferenz werden bereits durch die ersten sechs Kanalkoeffizienten erfaßt. Es wurde allgemein davon ausgegangen, daß eine Berücksichtigung der betragsmäßig kleinen Kanalkoeffizienten $h_6$, $h_7$ etc. nur eine vernachlässigbare Verbesserung, eventuell sogar eine Verschlechterung bei der Kanalentzerrung bewirkt.

II.

Der Rechenaufwand bei der Kanalentzerrung steigt exponentiell mit der Kanallänge (L+1) an, und zwar mit $2^{L+1}$ für GSM. Der Grund dafür ist, daß wegen des verbesserten Kanalgedächtnisses L sowohl die Zahl der Vorgängerzustände als auch die Zahl der Zielzustände bei der trellis-basierten Folgenschätzung zunimmt. Die Berücksichtigung zusätzlicher Kanalkoeffizienten führt daher zu erhöhtem Rechenaufwand.

III.

Im GSM-Standard umfaßt jeder Datenburst eine Trainingsfolge, deren Trainingssymbole empfangsseitig bekannt sind. Diese Trainingsfolge ist im GSM-Standard so ausgelegt, daß sich damit maximal sechs Kanalkoeffizienten $h_0,...h_5$ bestimmen lassen. Zur Ermittlung des siebten und weiterer Kanalkoeffizienten muß die Trainingsfolge anders als ursprünglich beabsichtigt verwendet werden. Es ist zwar möglich, mit Hilfe der Trainingsfolge weitere Kanalkoeffizienten zu ermitteln, diese Kanalkoeffizienten sind dann aber stark fehlerhaftet. Es wurde allgemein davon ausgegangen, daß die Berücksichtigung von stark fehlerhafteten Kanalkoeffizienten bei der Entzerrung die Bitfehlerrate eher verschlechtert als verbessert.

Es hat sich herausgestellt, daß für EDGE und unter HT (Hilly-Terrain) Übertragungsbedingungen die Berücksichtigung des siebten und weiterer Kanalkoeffizienten trotz des Fehlers, der bei der Bestimmung dieser Kanalkoeffizienten in Kauf genommen werden muß, die Bitfehlerrate signifikant verringern kann. Eine vorgegebene Bitfehlerrate von beispielsweise $10^{-3}$ läßt sich mit einer um 2 bis 3 dB geringeren Sendeleistung erzielen.

Dieser unerwartet starke Einfluß des betragsmäßig geringen, fehlerbehafteten siebten Kanalkoeffizienten läßt sich damit erklären, daß der Kanalentzerrung ein verbessertes Kanalmodell zugrunde gelegt wird. Dies ermöglicht eine bessere Analyse und Dekodierung des verzerrten Signals. Die Berücksichtigung des siebten und weiterer Kanalkoeffizienten scheint in vielen Fällen das Zünglein an der Waage für eine erfolgreiche Folgenschätzung zu sein.

Es ist von Vorteil, wenn es sich bei dem Kanalentzerrer um einen trellis-basierten Kanalentzerrer handelt, der die empfangenen Datensymbole mittels des Viterbi-Verfahrens entzerrt. Bei einer Entzerrung mittels des Viterbi-Verfahrens wird nicht das einzelne empfangene Datensymbol, sondern die gesamte Symbolfolge geschätzt (Folgenschätzung). Dazu werden die Metriken verschiedener Pfade durch das Trellis-Diagramm ermittelt und miteinander verglichen. Die als Ergebnis des Viterbi-Verfahrens erhaltene Symbolfolge stellt den kostenminimierten Pfad durch das Trellis-Diagramm dar. Mit einem trellis-basierten Kanalentzerrer lassen sich die gesendeten Datensymbole mit hoher Erkennungswahrscheinlichkeit rekonstruieren. Ein trellisbasierter Entzerrer, der mehr als sechs Kanalkoeffizienten verwendet, stellt den besten bislang bekannten Entzerrer dar.

Die unverzerrte Folge von Trainingssymbolen ist auf der Empfängerseite bekannt. Zum empfangenen Signal tragen wegen der Multipfad-Ausbreitungscharakteristik mehrere verschieden stark verzögerte Signalanteile bei. Das empfangene, verzerrte Signal ist daher eine Überlagerung von mehreren verschieden stark verzögerten unverzerrten Signalanteilen. Durch Korrelation mit dem unverzerrten Signal lassen sich die Beiträge der einzelnen Signalanteile ermitteln. Aus den verschiedenen Korrelationswerten lassen sich dann direkt die Kanalkoeffizienten ableiten.

Eine Trainingsfolge mit einer Länge von 26 Symbolen wird im GSM-Standard verwendet. Um den Kanalkoeffizienten $h_0$ zu bestimmen, wird eine Korrelation der mittleren 16 Symbole der unverzerrten Trainingsfolge mit einer 16 Symbole umfassenden empfangenen Trainingsfolge durchgeführt. Anschließend wird die Korrelationsanalyse mit der um eine Symbolposition nach rechts verschobenen Folge von empfangenen Trainingssymbolen wiederholt, um den Kanalkoeffizienten $h_1$ zu erhalten. Durch weitere Rechtsverschiebungen der empfangenen Trainingsfolge und anschließende Korrelationsanalyse können auch die weiteren Kanalkoeffizienten bestimmt werden. Mit einer 26 Symbole umfassenden Trainingsfolge können die Kanalkoeffizienten $h_0,...h_5$ fehlerfrei ermittelt werden. Bei der Ermittlung des siebten und aller folgenden Kanalkoeffizienten überlappt die empfangene Trainingsfolge mit der unverzerrten Folge von Trainingssymbolen nur noch teilweise. Insofern ergeben sich bei der Bestimmung der Kanalkoeffizienten $h_6$, $h_7$,... Fehler. Trotz dieser Fehler wird die Folgenschätzung durch Berücksichtigung dieser weiteren Kanalkoeffizienten jedoch verbessert. Insofern ist die erfindungsgemäße Berücksichtigung zusätzlicher Kanalkoeffizienten auch bei der 26 Symbole umfassenden Trainingsfolge des GSM-Standards vorteilhaft.

Gemäß einer weiteren vorteilhaften Ausführungsform der Erfindung handelt es sich bei dem Übertragungskanal um einen Hilly-Terrain Kanal. Bei der Mobilfunkübertragung in hügeligen und bergigen Gebieten kommt es wegen der Vielzahl von Signalpfaden zu einer ausgeprägten Intersymbol-Interferenz. Da das empfangene Signal auch relevante Beiträge von stark verzögerten Signalanteilen enthält, ist beim Hilly-Terrain Kanal besonders wichtig, auch die Kanalkoeffizienten höherer Ordnung zu berücksichtigen. Die Berücksichtigung des siebten und eventuell auch weiterer Kanalkoeffizienten verbessert daher insbesondere bei Hilly-Terrain Kanälen das zugrundeliegende Kanalmodell und bewirkt daher eine deutliche Absenkung der Bitfehlerrate.

Insbesondere ist es von Vorteil, zusätzlich zu den ersten sechs Kanalkoeffizienten einen siebten Kanalkoeffizienten zu bestimmen und bei der Kanalentzerrung zu verwenden. Bereits mit Berücksichtigung des siebten Kanalkoeffizienten kann die Bitfehlerrate signifikant abgesenkt werden.

Gemäß einer weiteren vorteilhaften Ausführungsform der Erfindung verarbeiten der Kanalschätzer und der Kanalentzerrer 8-PSK modulierte Datensymbole. Wegen der geringen Phasendifferenz von 45° zwischen den einzelnen Signalpunkten des Signalraums wird die 8-PSK-Modulation durch eine unzureichende Modellierung des Kanalverhaltens wesentlich stärker gestört als die relativ robuste GMSK-Modulation. Eine fehlerhafte Kanalschätzung führt bei der 8-PSK-Modulation sofort zu einem Anstieg der Bitfehlerrate. Umgekehrt wird durch die Berücksichtigung zusätzlicher Kanalkoeffizienten das Kanalmodell verfeinert, und dadurch können die einzelnen Phasenzustände besser identifiziert werden. Insbesondere bei der 8-PSK-Modulation ist daher eine genauere Kanalmodellierung von Vorteil.

Insbesondere ist es vorteilhaft, wenn der Kanalschätzer und der Kanalentzerrer Datensymbole im EDGE-Standard verarbeiten. Dieser GSM-Nachfolgestandard verwendet die 8-PSK-Modulation. Der Signal-Rausch-Abstand ist relativ hoch, so daß das Rauschen zunehmend in den Hintergrund tritt. Aus diesen beiden Gründen ist es wichtig, die Intersymbol-Interferenz durch eine wirkungsvolle Entzerrung zu beseitigen.

Nachfolgend wird die Erfindung anhand eines in der Zeichnung dargestellten Ausführungsbeispiels weiter beschrieben. Es zeigen:

Fig. 1 eine schematische Darstellung, wie das Kanalverhalten mit Hilfe von Kanalkoeffizienten modelliert werden kann;

Fig. 2 einen Mobilfunkempfänger, der einen Kanalschätzer sowie einen Kanalentzerrer umfaßt;

Fig. 3 die Struktur eines empfangenen Datenbursts, welcher eine Trainingsfolge aufweist;

Fig. 4 die Bestimmung der Kanalkoeffizienten $h_0$,... $h_6$ anhand von Korrelationseigenschaften der Trainingsfolge.

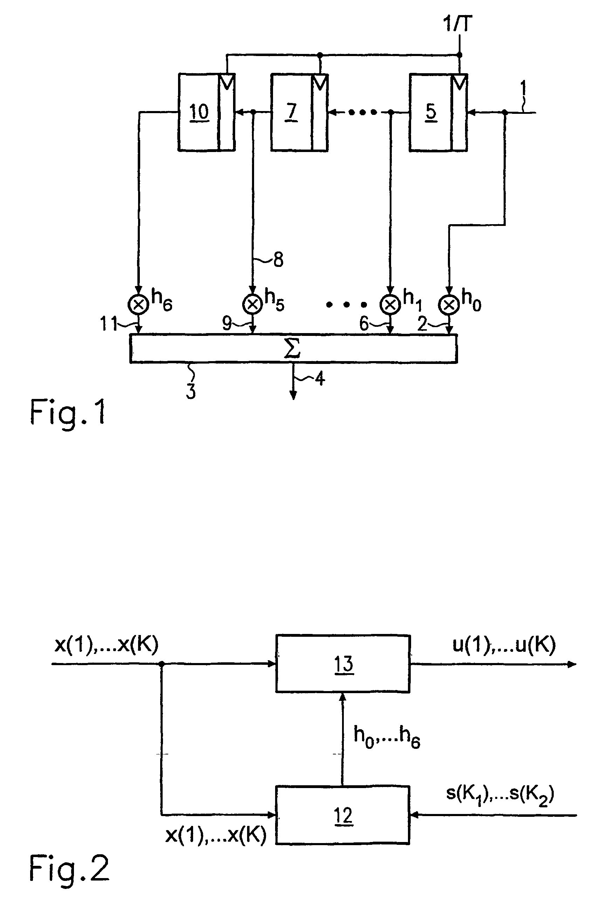

In Fig. 1 ist dargestellt, wie das Verhalten eines Mobilfunkkanals durch einen Satz von Kanalkoeffizienten $h_0$,...$h_L$ beschrieben werden kann. Dabei bezeichnet L das Kanalgedächtnis.

Bei der Mobilfunkübertragung gelangt ein gesendetes Signal über verschiedene Ausbreitungspfade zum Empfänger. Beispielsweise könnte der Empfänger einen ersten Signalanteil auf direktem Weg vom Sender erhalten, während ein zweiter Signalanteil den Empfänger nach einer Reflexion an einer Gebäudewand erreicht. Der zweite Signalanteil würde also gegenüber dem ersten Signalanteil verzögert beim Empfänger eintreffen, und das empfangene Signal bestünde aus dem überlagerten ersten und zweiten Signalanteil. Darüber hinaus können weitere, verschieden stark verzögerte Signalanteile zum empfangenen Signal beitragen, wobei sich das Gesamtsignal aus der Überlagerung der durch die verschiedenen Pfade unterschiedlich stark verzögerten Signalanteile zusammensetzt. Die sogenannte Intersymbol-Interferenz (ISI) wird also durch die Multipfad-Signalausbreitung verursacht.

In Fig. 1 ist ein Modell zur Nachbildung der Übertragungseigenschaften eines Kanals mit Hilfe von Kanalkoeffizienten gezeigt. Das Eingangssignal 1 entspricht dabei dem gesendeten Signal und weist keine Intersymbol-Interferenz auf. Das Eingangssignal 1 wird mit dem ersten Kanalkoeffizienten $h_0$ multipliziert und liefert so den am wenigsten verzögerten Signalanteil 2. Dieser Signalanteil 2 wird dem Addierer 3 zugeführt und trägt zum überlagerten Signal 4 bei.

Um den zweiten Signalanteil 6 zu erhalten, wird das Eingangssignal 1 durch ein erstes Verzögerungsglied 5 um die Datensymbol-Zeitdauer T verzögert, wobei T durch die Abtastfrequenz $f_{abtast}$ bestimmt wird:

$$T = \frac{1}{f_{abtast}}$$

Anschließend wird das verzögerte Signal mit dem zweiten Kanalkoeffizienten $h_1$ multipliziert. Auch dieser zweite Signalanteil 6 wird dem Addierer 3 zugeführt und trägt zum überlagerten Signal 4 bei. Am fünften Verzögerungsglied 7 kann das fünffach verzögerte Eingangssignal 8 abgegriffen werden, das mit dem Kanalkoeffizienten $h_5$ multipliziert wird, um den sechsten Signalanteil 9 zu liefern.

Bei der erfindungsgemäßen Lösung wird nun zusätzlich zu den Kanalkoeffizienten $h_0$ bis $h_5$ ein siebter Kanalkoeffizient $h_6$ zur Modellierung des Kanalverhaltens vorgesehen. Dadurch kann ein zusätzlicher siebter Signalanteil 11 bei der Bildung des überlagerten Signals 4 berücksichtigt werden. Die zusätzliche Verzögerung T des Signalanteils 11 gegenüber dem Signalanteil 9 wird durch das Verzögerungsglied 10 verursacht.

Entsprechend diesem Kanalmodell läßt sich das überlagerte Signal 4 darstellen als

$$\sum_{i=0}^{6} h_i \cdot s(k - i),$$

wobei $s(1), ... s(K)$ die unverzerrten Datensymbole bezeichnen.

Das erfindungsgemäß modifizierte Kanalmodell führt insbesondere dann zu einer verbesserten Dekodierung des empfangenen Signals, wenn stark verzögerte Signalanteile zum Gesamtsignal beitragen. Eine derart ausgeprägte Multipfad-Signalausbreitung ist beispielsweise in hügeligen und bergigen Funkgebieten zu erwarten, und deshalb eignet sich die Erfindung insbesondere für den Einsatz bei Hilly-Terrain Kanälen.

In Fig. 2 ist das Blockschaltbild eines erfindungsgemäßen Mobilfunkempfängers gezeigt. Die empfangene Folge von Datensymbolen $x(1),...x(K)$ eines Datenbursts wird sowohl dem Kanalschätzer 12 als auch dem Kanalentzerrer 13 zugeführt. Die Aufgabe des Kanalschätzers 12 ist es, mittels der Trainingsfolge die durch den Kanal bewirkte Verzerrung abzuschätzen und so die Kanalkoeffizienten $h_0$ bis $h_6$ des in Fig. 1 gezeigten Kanalmodells zu bestimmen. Die Bestimmung der Kanalkoeffizienten $h_0,...h_6$ erfolgt durch Korrelation der verzerrten Trainingsfolge $x(K_1),...x(K_2)$ mit der empfangsseitig bekannten, unverzerrten Trainingsfolge $s(K_1), ...s(K_2)$.

Die ermittelten Kanalkoeffizienten $h_0, ... h_6$ werden dem Kanalentzerrer 13 zugeführt, der eine Entzerrung der empfangenen Datensymbole $x(1), ... x(K)$ durchführt. Bei dem Kanalentzerrer kann es sich um einen trellis-basierten Kanalentzerrer handeln, der basierend auf dem Viterbi-Algorithmus eine Folgenschätzung der empfangenen Datensymbole durchführt, um so die entzerrten Datensymbole $u(1), ... u(K)$ zu erhalten.

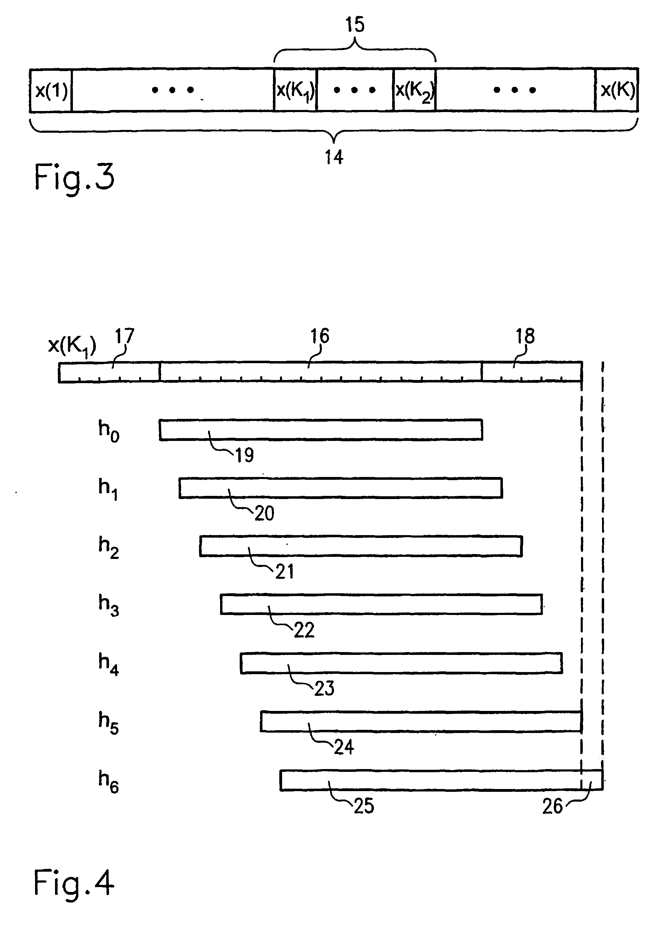

Fig. 3 zeigt die Struktur eines empfangenen Datenbursts 14, der die Datensymbole $x(1),...x(K)$ umfaßt. Im GSM-Standard wird die Trainingsfolge als Mittambel übertragen, und dies bedeutet, daß ab dem $K_1$-ten Datensymbol bis einschließlich zum $K_2$-ten Datensymbol die Trainingssymbole der Trainingsfolge gesendet werden. Entsprechend umfaßt der empfangene Datenburst 14 die verzerrte Trainingsfolge 15 mit den Datensymbolen $x(K_1), ...x(K_2)$. Dies bedeutet aber, daß dem empfangsseitigen Kanalschätzer sowohl die vorbekannte, unverzerrte Trainingsfolge $s(K_1),...s(K_2)$ als auch die verzerrte Trainingsfolge 15 mit den Datensymbolen $x(K_1),...x(K_2)$ zur Verfügung steht. Durch Vergleich der verzerrten und der unverzerrten Folge von Datensymbolen kann der Kanalschätzer 12 ermitteln, in welcher Weise der Mobilfunkkanal die übertragenen Datensymbole verzerrt.

In Fig. 4 ist gezeigt, wie die Kanalkoeffizienten $h_0,...h_6$ durch Korrelation der verzerrten Trainingsfolge $x(K_1),...x(K_2)$ mit der unverzerrten Trainingsfolge $s(K_1), ...s(K_2)$ bestimmt werden. Im GSM-Standard besteht die Trainingsfolge aus 26 Datensymbolen. Der mittlere Abschnitt 16 der Trainingsfolge, der für die eigentliche Korrelationsberechnung herangezogen wird, umfaßt 16 Datensymbole. Der vordere Abschnitt 17 sowie der hintere Abschnitt 18 umfassen jeweils 5 Symbole.

Zur Bestimmung des ersten Kanalkoeffizienten $h_0$ wird die Korrelation des mittleren Abschnitts 16 der verzerrten Trainingsfolge und der unverzerrten Trainingsfolge 19 berechnet. Im GSM-Standard kann jedes Datensymbol die Werte -1 und +1 annehmen. Durch Bitweises Multiplizieren und Aufaddieren erhält man die Korrelation der zwei Sequenzen, deren Maximalwert +16 (für den Fall der Identität beider Sequenzen) ist. Der ermittelte Korrelationswert ist zu $h_0$ proportional und kann direkt in $h_0$ umgerechnet werden. Anschließend wird die Korrelation zwischen der um eine Symbolposition nach rechts verschobenen unverzerrten Trainingsfolge 20 und der verzerrten Trainingsfolge berechnet. Es wird also die Korrelation der unverzerrten Trainingssymbole $s(K_1+5),...s(K_2-5)$ mit den verzerrten Trainingssymbolen $x(K_1+6),...x(K_2-4)$ bestimmt. Die Rechtsverschiebung um eine Symbolposition entspricht einer Verzögerung um eine Datensymbol-Zeitdauer T. Aus dem Korrelationsergebnis kann unmittelbar der Kanalkoeffizient $h_1$ erhalten werden.

Durch Korrelation der um zwei Symbolpositionen nach rechts verschobenen, unverzerrten Trainingsfolge 21 mit den empfangenen Trainingssymbolen $x(K_1+7),...x(K_2-3)$ kann der Kanalkoeffizient $h_2$ erhalten werden. Bei der Durchführung dieser Korrelation werden auch zwei Datensymbole des hinteren Abschnitts 18 der verzerrten Trainingsfolge verwendet, und zwar die Datensymbole $x(K_2-4)$ und $x(K_2-3)$. Dieser hintere Abschnitt 18 der Trainingsfolge ist zu dem Zweck vorgesehen, eine fehlerfreie Korrelationsberechnung zu ermöglichen. Erst nach diesem hinteren Abschnitt 18 der Trainingsfolge, also ab dem Datensymbol $x(K_2+1)$, beginnen die Nutzinformation enthaltenden Datensymbole.

In entsprechender Weise werden durch Korrelation der um weitere Symbolpositionen nach rechts verschobenen unverzerrten Trainingsfolgen 22, 23, 24 mit Datensymbolen des mittleren Abschnitts 16 sowie des hinteren Abschnitts 18 der empfangenen Trainingsfolge die Kanalkoeffizienten $h_3$, $h_4$ und $h_5$ bestimmt. Zur Berechnung der Korrelationen werden dabei ausschließlich Datensymbole der Trainingsfolge herangezogen.

Bei der erfindungsgemäßen Berechnung des siebten Kanalkoeffizienten $h_6$ muß die unverzerrte Trainingsfolge 25 gegenüber der empfangenen Trainingsfolge um genau 6 Symbolpositionen nach rechts verschoben werden, was einer Verzögerung um sechs Datensymbol-Zeitdauern T entspricht. Wie aus Fig. 4 erkennbar ist, kann die Korrelationsberechnung dann aber nicht mehr vollständig innerhalb der Trainingsfolge durchgeführt werden.

Hinsichtlich der ersten 15 Symbole der unverzerrten Trainingsfolge 25 wird die Korrelation mit den empfangenen Datensymbolen des mittleren Abschnitts 16 sowie des hinteren Abschnitts 18 durchgeführt. Hinsichtlich des letzten Trainingssymbols 26 muß die Korrelation aber bereits mit dem ersten Datensymbol, das Nutzdaten repräsentiert, durchgeführt werden. Der hintere Abschnitt 18 der Trainingsfolge ist im GSM-Standard nicht lang genug, um die Korrelation zur Ermittlung des siebten Kanalkoeffizienten vollständig innerhalb der Trainingsfolge durchführen zu können. Das erste zur Nutzdatensequenz gehörige Datensymbol kann jeden beliebigen Wert annehmen, und insofern verursacht der Korrelationsbeitrag des Trainingssymbols 26 einen Fehler.

Die Trainingsfolge des GSM-Standards ist für die Bestimmung vom maximal sechs Kanalkoeffizienten ausgelegt. Während die Kanalkoeffizienten $h_0, ... h_5$ mit hoher Genauigkeit ermittelt werden können, muß bei den betragsmäßig meist sehr kleinen zusätzlichen Kanalkoeffizienten $h_6$, $h_7$, etc. wegen des Überlaps mit Teilen der Nutzsequenz ein erheblicher Fehler in Kauf genommen werden.

Aus Fig. 2 ist erkennbar, daß die vom Kanalschätzer 12 ermittelten Kanalkoeffizienten dem Kanalentzerrer 13 zugeführt werden, der die empfangenen Datensymbole x(1),...x(K) entsprechend dem durch $h_0,...h_L$ vorgegebenen Kanalmodell entzerrt und so die Folge von entzerrten Datensymbolen u(1), ...u(K) liefert. Dazu wird eine Folgenschätzung der empfangenen Symbole basierend auf dem Viterbi-Algorithmus durchgeführt. Bei der Berechnung der Kosten von verschiedenen Pfaden durch das Trellis-Diagramm werden jeweils Zustandsübergänge von $2^L$ Vorgängerzuständen zu $2^L$ Zielzuständen betrachtet. Bei einem Zustandsübergang kommt jeweils ein neues Datensymbol zum Pfad dazu, welches zwei Zustände (GMSK-Modulation) bzw. acht Zustände (8-PSK-Modulation) aufweist. Der gesamte Rechenaufwand für die Folgenschätzung ist proportional zu $2^{L+1}$ (im Fall der GMSK-Modulation) bzw. proportional zu $8^{L+1}$ (im Fall der 8-PSK-Modulation). Daraus folgt, daß die Erhöhung der Zahl der Kanalkoeffizienten von sechs auf sieben zu einer Verdoppelung des Rechenaufwands bei GMSK und einer Verachtfachung bei 8-PSK bei der Kanalentzerrung führt. Wegen der ständigen Erhöhung der Prozessorleistung kann dieser Mehraufwand aber angesichts der deutlich verringerten Bitfehlerrate in Kauf genommen werden. Eine vorgegebene Bitfehlerrate kann bereits mit einer um 2 bis 3 dB abgesenkten Sendeleistung sichergestellt werden.

**Patentansprüche**

1. Empfangseinheit für die Mobilfunkübertragung, welche aufweist

   - einen Kanalschätzer (12), der so ausgelegt ist, daß er Kanalkoeffizienten ($h_0$, $h_1$, $h_2$, ...) zur Modellierung des Übertragungskanals durch Korrelation der empfangenen Datensymbole mit einer aus 26 Datensymbolen bestehenden Trainingsfolge ermittelt,
   - einen Kanalentzerrer (13), der so ausgelegt ist, daß er die empfangenen Datensymbole unter Verwendung der vom Kanalschätzer (12) ermittelten Kanalkoeffizienten entzerrt, **dadurch gekennzeichnet, daß**
   - der Kanalschätzer (12) zusätzlich so ausgelegt ist, daß er zu den ersten 6 Kanalkoeffizienten ($h_0$, $h_1$, ... $h_5$) zumindest einen weiteren Kanalkoeffizienten ermittelt, wobei die für die Korrelation mit der Trainingsfolge verwendeten empfangenen Datensymbole bei der Ermittlung des zumindest einen weiteren Kanalkoeffizienten zumindest ein empfangenes Datensymbol der Trainingsfolge weniger enthalten als bei der Ermittlung der ersten 6 Kanalkoeffizienten, und
   - der Kanalentzerrer (13) ausgelegt ist, die Entzerrung der empfangenen Datensymbole unter Verwendung von mehr als 6 Kanalkoeffizienten durchzuführen.

2. Empfangseinheit gemäß Anspruch 1,
   **dadurch gekennzeichnet, daß**
   es sich bei dem Kanalentzerrer (13) um einen trellis-basierten Kanalentzerrer (13) handelt, der so ausgelegt ist, daß er die empfangenen Datensymbole mittels des Viterbi-Verfahrens entzerrt.

3. Empfangseinheit gemäß Anspruch 1 oder 2,
   **dadurch gekennzeichnet, daß**
   es sich bei dem Übertragungskanal um einen Hilly-Terrain Kanal handelt.

4. Empfangseinheit nach einem der vorhergehenden Ansprüche,
   **dadurch gekennzeichnet, daß** der Kanalschätzer (12) ausgelegt ist, zusätzlich zu den ersten 6 Kanalkoeffizienten ($h_0$, $h_1$, ... $h_5$) einen siebten Kanalkoeffizienten ($h_6$) zu ermitteltn und daß der Kanalentzerrer (13) ausgelegt ist, die Entzerrung der empfangenen Datensymbole unter Verwendung von 7 Kanalkoeffizienten ($h_0$, $h_1$, ... $h_6$) durchzuführen.

5. Empfangseinheit nach einem der vorhergehenden Ansprüche,
**dadurch gekennzeichnet, daß**
der Kanalschätzer (12) und der Kanalentzerrer (13) ausgelegt sind, 8-PSK modulierte Datensymbole zu verarbeiten.

6. Empfangseinheit gemäß einem der vorhergehenden Ansprüche, **dadurch gekennzeichnet, daß** der Kanalschätzer (12) und der Kanalentzerrer (13) ausgelegt sind, Datensymbole im EDGE-Standard zu verarbeiten.

7. Verfahren zur Entzerrung von über einen Mobilfunkkanal übertragenen Datensymbolen,
**gekennzeichnet durch** folgende Schritte:

a) Ermitteln von 6 und mindestens einem weiteren Kanalkoeffizienten ($h_0$, $h_1$, ... $h_5$, $h_6$ ...) **durch** Korrelation der empfangenen Datensymbole mit einer aus 26 Datensymbolen bestehenden Trainingsfolge zur Modellierung des Übertragungskanals, wobei die für die Korrelation mit der Trainingsfolge verwendeten empfangenen Datensymbole bei der Ermittlung des zumindest einen weiteren Kanalkoeffizienten zumindest ein empfangenes Datensymbol der Trainingsfolge weniger enthalten als bei der Ermittlung der ersten 6 Kanalkoeffizienten;
b) Entzerren der empfangenen Datensymbole unter Verwendung der in Schritt a) ermittelten Kanalkoeffizienten.

8. Verfahren nach Anspruch 7,
**dadurch gekennzeichnet, daß**
die empfangenen Datensymbole durch einen trellis-basierten Kanalentzerrer (13) mittels des Viterbi-Verfahrens entzerrt werden.

9. Verfahren nach einem der Ansprüche 7 oder 8,
**dadurch gekennzeichnet, daß**
die mindestens 7 Kanalkoeffizienten ($h_0$, $h_1$, ... $h_5$, $h_6$ ...) zur Modellierung des Übertragungskanals mittels eines Kanalschätzers (12) durch Korrelation der empfangenen Datensymbole mit einer Trainingsfolge ermittelt werden.

10. Verfahren nach einem der Ansprüche 7 bis 9,
**dadurch gekennzeichnet, daß**
es sich bei dem Übertragungskanal um einen Hilly-Terrain Kanal handelt.

11. Verfahren nach einem der Ansprüche 7 bis 10,

**dadurch gekennzeichnet, daß**
7 Kanalkoeffizienten ($h_0$, $h_1$, ... $h_6$) ermittelt werden.

12. Verfahren nach einem der Ansprüche 7 bis 11,
**dadurch gekennzeichnet, daß**
die empfangenen Datensymbole entsprechend dem 8-PSK-Standard verarbeitet werden.

13. Verfahren nach einem der Ansprüche 7 bis 12,
**dadurch gekennzeichnet, daß**
die empfangenen Datensymbole entsprechend dem EDGE-Standard verarbeitet werden.

## Claims

1. Receiver unit for mobile radio transmission that has

- a channel estimator (12) which is designed such that it determines channel coefficients ($h_0$, $h_1$, $h_2$, ...) for modelling the transmission channel by correlating the received data symbols with a training sequence comprising 26 data symbols,
- a channel equalizer (13) which is designed such that it equalizes the received data symbols by using the channel coefficients determined by the channel estimator (12), **characterized in that**
- the channel estimator (12) is designed such that it determines at least one further channel coefficient in addition to the first 6 channel coefficients ($h_0$, $h_1$, ... $h_5$), the received data symbols used for the correlation with the training sequence containing in the determination of the at least one further channel coefficient at least one fewer received data symbol of the training sequence than in the determination of the first 6 channel coefficients, and
- the channel equalizer (13) is designed for carrying out the equalization of the received data symbols by using more than 6 channel coefficients.

2. Receiver unit according to Claim 1, **characterized in that** the channel equalizer (13) is a trellis-based channel equalizer (13) which is designed such that it equalizes the received data symbols by means of the Viterbi method.

3. Receiver unit according to Claim 1 or 2, **characterized in that** the transmission channel is a hilly terrain channel.

4. Receiver unit according to one of the preceding claims, **characterized in that** the channel estimator (12) is designed for determining a seventh channel coefficient ($h_6$) in addition to the first 6 channel

coefficients ($h_0$, $h_1$, ... $h_5$), and **in that** the channel equalizer (13) is designed for carrying out the equalization of the received data symbols by using 7 channel coefficients ($h_0$, $h_1$, ... $h_6$).

5. Receiver unit according to one of the preceding claims, **characterized in that** the channel estimator (12) and the channel equalizer (13) are designed for processing 8-PSK modulated data symbols.

6. Receiver unit according to one of the preceding claims, **characterized in that** the channel estimator (12) and the channel equalizer (13) are designed for processing data symbols in the EDGE standard.

7. Method for equalizing data symbols transmitted via a mobile radio channel, **characterized by** the following steps:

   a) determining 6 and at least one further channel coefficient ($h_0$, $h_1$, ... $h_5$, $h_6$ ...) by correlation of the received data symbols with a training sequence, comprising 26 data symbols, for modelling the transmission channel, the received data symbols used for the correlation with the training sequence containing in the determination of the at least one further channel coefficient at least one fewer received data symbol of the training sequence than in the determination of the first 6 channel coefficients; and
   b) equalizing the received data symbols by using the channel coefficients determined in step a).

8. Method according to claim 7, **characterized in that** the received data symbols are equalized by a trellis-based channel equalizer (13) by means of the Viterbi method.

9. Method according to one of Claims 7 or 8, **characterized in that** the at least 7 channel coefficients ($h_0$, $h_1$, ... $h_5$, $h_6$ ...) for modelling the transmission channel are determined by means of a channel estimator (12) by correlation of the received data symbols with a training sequence.

10. Method according to one of Claims 7 to 9, **characterized in that** the transmission channel is a hilly terrain channel.

11. Method according to one of Claims 7 to 10, **characterized in that** 7 channel coefficients ($h_0$, $h_1$, ... $h_6$) are determined.

12. Method according to one of Claims 7 to 11, **characterized in that** the received data symbols are processed in accordance with the 8-PSK standard.

13. Method according to one of Claims 7 to 12, **characterized in that** the received data symbols are processed in accordance with the EDGE standard.

**Revendications**

1. Unité de réception pour la transmission par téléphonie mobile, qui comprend

   - un estimateur (12) de canal, qui est conçu pour déterminer des coefficients ($h_0$, $h_1$, $h_2$, ...) de canal pour une modélisation du canal de transmission par corrélation des symboles de données reçus avec une suite d'apprentissage constituée de 26 symboles de données,
   - un égaliseur (3) de canal, qui est conçu pour égaliser les symboles de données reçus en utilisant les coefficients de canal déterminés par l'estimateur (12) de canal, **caractérisée en ce que**
   - l'estimateur (12) de canal est conçu, en outre, pour déterminer outre les six premiers coefficients ($h_0$, $h_1$, ... $h_5$) de canal au moins un autre coefficient de canal, les symboles de données reçus, utilisés pour la corrélation avec la suite d'apprentissage lors de la détermination du au moins un autre coefficient de canal, contenant au moins un symbole de donnée reçu de la suite d'apprentissage de moins que lors de la détermination des six premiers coefficients de canal, et
   - l'égaliseur (13) de canal est conçu pour effectuer l'égalisation des symboles de données reçus en utilisant plus de six coefficients de canal.

2. Unité de réception suivant la revendication 1, **caractérisée en ce que** l'égaliseur (13) de canal est un égaliseur (13) de canal à base de treillis qui est conçu pour égaliser les symboles de données reçus au moyen du procédé Viterbi.

3. Unité de réception suivant la revendication 1 ou 2, **caractérisée en ce que** le canal de transmission est un canal Hilly-Terrain.

4. Unité de réception suivant l'une des revendications précédentes, **caractérisée en ce que** l'estimateur (12) de canal est conçu pour déterminer en plus des six premiers coefficients ($h_0$, $h_1$, ... $h_5$) de canal un septième coefficient ($h_6$) de canal et **en ce que** l'égalisateur (13) de canal est conçu pour effectuer une égalisation des symboles de données reçus en utilisant sept coefficients ($h_0$, $h_1$, ... $h_6$) de canal.

5. Unité de réception suivant l'une des revendications précédentes,

**caractérisée en ce que** l'estimateur (12) de canal et l'égalisateur (13) de canal sont conçus pour traiter des symboles de données modulés 8-PSK.

6. Unité de réception suivant l'une des revendications précédentes,

   **caractérisée en ce que** l'estimateur (12) de canal et l'égalisateur (13) de canal sont conçus pour traiter des symboles de données dans le standard EDGE.

7. Procédé d'égalisation de symboles de données transmis par un canal de téléphonie mobile,

   **caractérisé par** les stades suivants :

   a) détermination de six et d'au moins un autre coefficient ($h_0$, $h_1$, ... $h_5$, $h_6$ ...) de canal par corrélation des symboles de données reçus avec une suite d'apprentissage constituée de 26 symboles de données pour une modélisation du canal de transmission, les symboles de données reçus utilisés pour la corrélation avec la suite d'apprentissage contenant, lors de la détermination du au moins un autre coefficient de canal, au moins un symbole de donnée reçu de la suite d'apprentissage de moins que lors de la détermination des six premiers coefficients de canal ;
   b) égalisation des symboles de données reçus en utilisant les coefficients de canal déterminés au stade a).

8. Procédé suivant la revendication 7,

   **caractérisé en ce que** les symboles de données reçus sont égalisés par un égalisateur (13) de canal à base de treillis au moyen du procédé Viterbi.

9. Procédé suivant l'une des revendications 7 ou 8,

   **caractérisé en ce que** l'on détermine les au moins sept coefficients ($h_0$, $h_1$, ... $h_5$, $h_6$ ...) de canal pour une modélisation du canal de transmission au moyen d'un estimateur (12) de canal par corrélation des symboles de données reçus avec une suite d'apprentissage.

10. Procédé suivant l'une des revendications 7 à 9,

    **caractérisé en ce que** le canal de transmission est un canal Hilly-Terrain.

11. Procédé suivant l'une des revendications 7 à 10,

    **caractérisé en ce que** l'on détermine sept coefficients ($h_0$, $h_1$, ... $h_6$) de canal.

12. Procédé suivant l'une des revendications 7 à 11,

    **caractérisé en ce que** l'on traite les symboles de données reçus conformément au standard 8-PSK.

13. Procédé suivant l'une des revendications 7 à 12,

    **caractérisé en ce que** l'on traite les symboles de données reçus conformément au standard EDGE.

Fig.1

Fig.2

15

$x(1)$ · · · $x(K_1)$ · · · $x(K_2)$ · · · $x(K)$

14

# Fig.3

$x(K_1)$ 17 16 18

$h_0$ 19

$h_1$ 20

$h_2$ 21

$h_3$ 22

$h_4$ 23

$h_5$ 24

$h_6$ 25 26

# Fig.4